# EUROPEAN PATENT APPLICATION

(11) **EP 4 711 163 A1**
(43) Date of publication of application: **18.03.2026**
(21) Application number: 24835386.4
(22) Date of filing: 04.07.2024
(51) Int. Cl.: B60J 1/08, B60J 1/10, B60R 13/04

(54) **QUARTER WINDOW ASSEMBLY AND VEHICLE**

(30) Priority: 04.07.2023 CN 202310813091; 08.03.2024 CN 202420453396 U
(71) Applicant: Fuyao Glass Industry Group Co., Ltd., Fuqing, Fujian 350300 (CN)
(72) Inventor: ZHOU, Baijun, Fuzhou, Fujian 350300 (CN); ZHANG, Yu, Fuzhou, Fujian 350300 (CN); LIU, Sha, Fuzhou, Fujian 350300 (CN); ZHANG, Xiaoyun, Fuzhou, Fujian 350300 (CN); WANG, Liqiang, Fuzhou, Fujian 350300 (CN)
(74) Representative: Mewburn Ellis LLP
(86) International application number: PCT/CN2024/103483
(87) International publication number: WO 2025/007906

(57) **Abstract**

A quarter window assembly (100) and a vehicle (1000) are provided. The quarter window assembly (100) includes quarter window glass (10), an insert (20), and a first encapsulating member (40). The insert (20) is integrally molded with the quarter window glass (10). The insert (20) includes a first connecting portion (201). The first encapsulating member (40) includes a first encapsulating portion (401) and a second connecting portion (402) connected to the first encapsulating portion (401). The first encapsulating portion (401) is configured to be wrapped around an edge of a counterpart (30). The second connecting portion (402) is detachably connected to the first connecting portion (201). The vehicle (1000) includes the counterpart (30) and the quarter window assembly (100). The counterpart (30) is disposed at a periphery of the quarter window glass (10).

## Description

### CROSS-REFERENCE TO RELATED APPLICATION(S)

This application claims priority to Application No. 202310813091X, entitled "QUARTER WINDOW ASSEMBLY AND VEHICLE", and also claims priority to Application No. 2024204533964, entitled "VEHICLE BODY ASSEMBLY AND VEHICLE", the entire disclosure of which are hereby incorporated by reference.

### TECHNICAL FIELD

This disclosure relates to the field of vehicle technology, and in particular, to a quarter window assembly and a vehicle.

### BACKGROUND

In the related art, there is a certain interference between quarter window glass of a vehicle and a corresponding counterpart, and the quarter window glass needs to be disassembled before the counterpart is disassembled, thereby resulting in a complex maintenance method and a high maintenance cost for the counterpart.

### SUMMARY

The present disclosure provides a quarter window assembly and a vehicle, which can reduce a maintenance difficulty and a maintenance cost for a counterpart.

In one aspect, the present disclosure provides a quarter window assembly. The quarter window assembly includes a quarter window glass, an insert, and a first encapsulating member. The insert is integrally molded with the quarter window glass. The insert includes a first connecting portion. The first encapsulating member includes a first encapsulating portion and a second connecting portion connected to the first encapsulating portion. The first encapsulating portion is configured to be wrapped around an edge of a counterpart. The second connecting portion is detachably connected to the first connecting portion.

In a possible embodiment, the second connecting portion is fixed to the first connecting portion by means of snap-fit connection.

In a possible embodiment, one of the first connecting portion and the second connecting portion defines a groove, and another of the first connecting portion and the second connecting portion includes a protruding post. The protruding post is inserted into and snap-fitted into the groove. An opening of the groove faces towards a first direction.

In a possible embodiment, one of the first connecting portion and the second connecting portion further includes a snap-fit hook, and another of the first connecting portion and the second connecting portion further includes a snap-fit slot. The snap-fit hook is snap-fitted with the snap-fit slot in the first direction.

In a possible embodiment, the insert further includes a first limiting portion. The first encapsulating member further includes a second limiting portion. The first limiting portion has a first limiting surface facing towards the second limiting portion. The second limiting portion has a second limiting surface facing towards the first limiting portion. The second limiting surface faces towards the first limiting surface in the first direction. The first limiting surface is in contact with the second limiting surface.

In a possible embodiment, the first limiting portion is implemented as multiple first limiting portions. The multiple first limiting portions are arranged at intervals. The insert further defines at least one notch. One of the at least one notch is located between adjacent two of the multiple first limiting portions.

In a possible embodiment, the insert further includes a third limiting portion. The first encapsulating member further includes a fourth limiting portion. The fourth limiting portion is in fit with the third limiting portion for limiting in a second direction. The second direction is perpendicular to the first direction.

In a possible embodiment, the third limiting portion has a third limiting surface and a fourth limiting surface opposite to the third limiting surface in the second direction. The fourth limiting portion has a fifth limiting surface and a sixth limiting surface facing towards the fifth limiting surface in the second direction. The fifth limiting surface is in contact with the third limiting surface. The sixth limiting surface is in contact with the fourth limiting surface.

In a possible embodiment, the insert further includes a fifth limiting portion. The insert further includes a fifth limiting portion. The first encapsulating member further includes a sixth limiting portion. The sixth limiting portion is in fit with the fifth limiting portion for limiting in a third direction. The sixth limiting portion is connected to one end of the first encapsulating portion. The third direction is perpendicular to both the first direction and the second direction.

In a possible embodiment, the fifth limiting portion has a seventh limiting surface and an eighth limiting surface facing towards the seventh limiting surface in the third direction. The sixth limiting portion has a ninth limiting surface and a tenth limiting surface opposite to the ninth limiting surface in the third direction. The ninth limiting surface is in contact with the seventh limiting surface. The tenth limiting surface is in contact with the eighth limiting surface.

In a possible embodiment, the quarter window assembly further includes a second encapsulating member that is integrally molded with the quarter window glass and wrapped around an edge of the quarter window glass. The second encapsulating member and the insert form a seventh limiting portion. The first encapsulating member further includes an eighth limiting portion. The eighth limiting portion is in fit with the seventh limiting portion for limiting in the third direction. The eighth limiting portion is connected to another end of the first encapsulating portion.

In a possible embodiment, the seventh limiting portion has an eleventh limiting surface and a twelfth limiting surface facing towards the eleventh limiting surface in the third direction. The eighth limiting portion has a thirteenth limiting surface and a fourteenth limiting surface opposite to the thirteenth limiting surface in the third direction. The thirteenth limiting surface is in contact with the eleventh limiting surface. The fourteenth limiting surface is in contact with the twelfth limiting surface.

In a possible embodiment, the quarter window assembly further includes a decorative member. The decorative member is disposed on an outer surface of the first encapsulating member.

In a possible embodiment, the first connecting portion defines a snap-fit slot. The snap-fit slot is provided with a first snap portion on a slot sidewall of the snap-fit slot. The second connecting portion is provided with a snap-fit hook. The snap-fit hook is configured to be disposed in the snap-fit slot and abut against a surface of the first snap portion facing towards a slot bottom-wall of the snap-fit slot.

In a possible embodiment, the first connecting portion further defines an opening extending through the slot sidewall of the snap-fit slot and an outer surface of the first connecting portion. The opening is closer to the slot bottom-wall of the snap-fit slot than the first snap portion; and when the snap-fit hook abuts against the surface of the first snap portion facing towards the slot bottom-wall of the snap-fit slot. At least a part of the snap-fit hook is exposed from the opening.

In a possible embodiment, the first connecting portion further has a first abutting surface connected to a periphery of the snap-fit slot in a bent manner. The second connecting portion further has a second abutting surface connected to the snap-fit hook in a bent manner. When the snap-fit hook abuts against the surface of the first snap portion facing towards the slot bottom-wall of the snap-fit slot, the second abutting surface is configured to abut against the first abutting surface.

In a possible embodiment, the quarter window assembly further includes a second encapsulating member that is integrally molded with the quarter window glass and wrapped around an edge of the quarter window glass. At least a part of the second encapsulating member is disposed on an outer side surface of the first connecting portion. The second encapsulating member defines a limiting groove at one side of the second encapsulating member facing towards the decorative member. The limiting groove is configured to accommodate a part of the second connecting portion and a part of the decorative member. The limiting groove is in communication with the first connecting portion. The part of the second connecting portion located in the limiting groove abuts against the first connecting portion. The part of the decorative member located in the limiting groove abuts against the second encapsulating member.

In a possible embodiment, the outer side surface is further provided with a limiting boss. The limiting boss is configured to abut against an end portion of the decorative member that is disposed in an extending direction of the first encapsulating member.

In a possible embodiment, the quarter window assembly further includes a fixing member. The fixing member is snap-fitted with the second connecting portion and a part of an outer side surface of the first encapsulating member. A part of the decorative member is bonded to the fixing member at one side of the fixing member away from the outer side surface of the first encapsulating member. Another part of the decorative member is bonded to the outer side surface of the first encapsulating member.

In another aspect, the present disclosure further provides a vehicle. The vehicle includes a counterpart and the quarter window assembly. The counterpart is disposed at a periphery of the quarter window glass.

For the quarter window assembly provided in the present disclosure, the insert is integrally molded with the quarter window glass, and the first encapsulating member is configured to be wrapped around the edge of the counterpart and is detachably connected to the insert. Therefore, during replacement of the counterpart, the first encapsulating member and the insert can be directly separated, and then the counterpart is detached, thereby achieving the purpose of maintaining and replacing the counterpart without disassembling the quarter window glass. Furthermore, the difficulty in maintaining and replacing the counterpart is reduced, damage to the quarter window glass is avoided, and maintenance costs can be reduced.

### BRIEF DESCRIPTION OF THE DRAWINGS

To describe the technical solution in embodiments of the present disclosure more clearly, the following describes the accompanying drawings required for describing the embodiments of the present disclosure.
FIG. 1 is a schematic structural view of a vehicle provided in an embodiment of the present disclosure.
FIG. 2 is a schematic structural view of a quarter window assembly provided in an embodiment of the present disclosure from one perspective.
FIG. 3 is a schematic structural view of a quarter window assembly provided in an embodiment of the present disclosure from another perspective.
FIG. 4 is a schematic cross-sectional view of the quarter window assembly shown in FIG. 3 taken along line A-A.
FIG. 5 is a schematic cross-sectional view of the quarter window assembly shown in FIG. 3, where an insert defines a groove and a first encapsulating member includes a protruding post.
FIG. 6 is a schematic cross-sectional view of the quarter window assembly shown in FIG. 3 taken along line B-B.
FIG. 7 is a schematic structural view of the quarter window assembly shown in FIG. 2, where an insert includes a first limiting portion and a first encapsulating member includes a second limiting portion.
FIG. 8 is a partial enlarged schematic structural view of the quarter window assembly shown in FIG. 7 at region F.
FIG. 9 is a partial enlarged schematic structural view of the quarter window assembly shown in FIG. 7 at region C.
FIG. 10 is a schematic structural view of a quarter window assembly provided in an embodiment of the present disclosure from yet another perspective.
FIG. 11 is a schematic cross-sectional view of the quarter window assembly shown in FIG. 10 taken along line D-D.
FIG. 12 is a schematic cross-sectional view of the quarter window assembly shown in FIG. 10 taken along line E-E.
FIG. 13 is a schematic structural view of a vehicle provided in an implementation of the present disclosure.
FIG. 14 is a schematic structural view of a quarter window assembly provided in another implementation of the present disclosure.
FIG. 15 is a cross-sectional view of the quarter window assembly in FIG. 14 taken along cross-section line F-F.
FIG. 16 is a partial enlarged view of FIG. 15.
FIG. 17 is a cross-sectional view of the quarter window assembly in FIG. 14 taken along cross-section line G-G.
FIG. 18 is a schematic structural view of a first connecting portion provided in an implementation of the present disclosure.
FIG. 19 is a schematic structural view of a first encapsulating member provided in an implementation of the present invention.
FIG. 20 is a cross-sectional view of the quarter window assembly in FIG. 14 taken along cross-section line H-H.

Reference signs are described as follows: vehicle 1000; quarter window assembly 100; quarter window glass 10; insert 20; counterpart 30; first encapsulating member 40; first connecting portion 201; first encapsulating portion 401; second connecting portion 402; groove 210; protruding post 420; snap-fit slot 211; snap-fit hook 421; first slot-wall 2110; second slot-wall 2112; first limiting portion 202; second limiting portion 403; notch 203; third limiting portion 204; fourth limiting portion 404; third limiting surface 240; fourth limiting surface 241; fifth limiting portion 205; sixth limiting portion 405; seventh limiting surface 250; eighth limiting surface 251; ninth limiting surface 450; tenth limiting surface 451; second encapsulating member 50; seventh limiting portion 501; eighth limiting portion 406; eleventh limiting surface 206; twelfth limiting surface 511; thirteenth limiting surface 460; fourteenth limiting surface 461; decorative member 11; first snap portion 122; opening 123; first abutting surface 124; second abutting surface 1312; limiting boss 134; limiting groove 141; fixing member 15.

### DETAILED DESCRIPTION

The technical solutions provided by the present disclosure will be clearly and completely described in the following with reference to the accompanying drawings. Apparently, the embodiments described in the present disclosure are merely a part rather than all of the embodiments. All other embodiments obtained by those of ordinary skill in the art based on the embodiments described in the present disclosure without creative efforts shall belong to the protection scope of the present disclosure.

Reference in the present disclosure to "embodiment" or "implementation" means that a particular feature, structure, or characteristic described in combination with the embodiment or implementation can be contained in at least one embodiment of the present disclosure. The phrases "embodiment" or "implementation" appearing in various places in the specification do not necessarily all refer to the same embodiment, nor are embodiments mutually exclusive, independent, or alternative to other embodiments. It can be explicitly and implicitly understood by those skilled in the art that the embodiments described in the present disclosure can be combined with other embodiments.

The terms "first", "second", etc., in the specification and claims of the present disclosure and the described accompanying drawings are used for distinguishing different objects, rather than for describing a specific order. Furthermore, the terms "including" and "having" and any variations thereof, are intended to cover a non-exclusive inclusion.

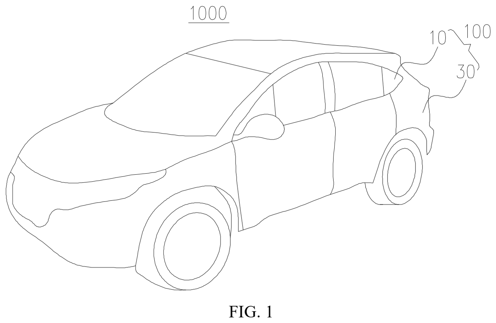

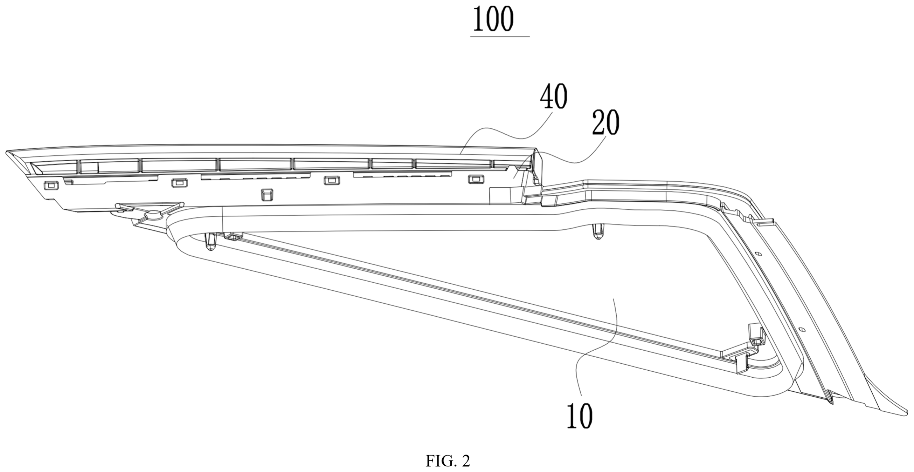

Reference can be made to FIG. 1 and FIG. 2, where FIG. 1 is a schematic structural view of a vehicle 1000 provided in an embodiment of the present disclosure, and FIG. 2 is a schematic structural view of a quarter window assembly 100 provided in an embodiment of the present disclosure from one perspective. The vehicle 1000 may be a sedan, a bus, a truck, a tractor, a special-purpose transport vehicle, a special vehicle, and the like. In the embodiments of the present disclosure, a sedan is taken as an example. The vehicle 1000 includes a counterpart 30 and a quarter window assembly 100. Certainly, the vehicle 1000 can further include wheels, a chassis, an engine, and the like. The quarter window assembly 100 includes quarter window glass 10, an insert 20, and a first encapsulating member 40.

The quarter window glass 10 may be triangular quarter window glass, quadrangular quarter window glass, etc. The quarter window glass 10 may be located near an A pillar of the vehicle 1000 or near a C pillar of the vehicle 1000. By means of the design of the quarter window glass 10 in the vehicle 1000, the field of view can be enlarged, the dead zone can be reduced, and the light transmittance can be improved, thereby facilitate lifting of the vehicle window and increasing the strength of a vehicle body.

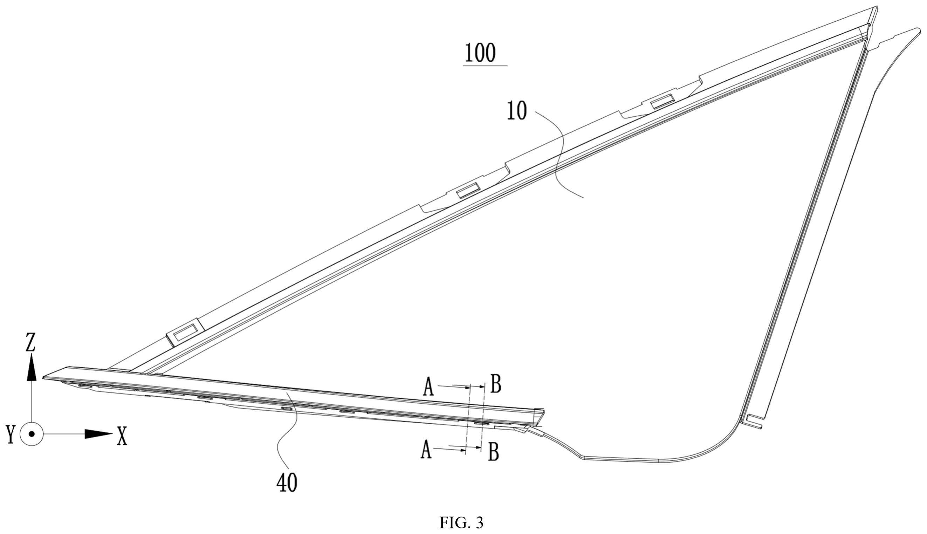

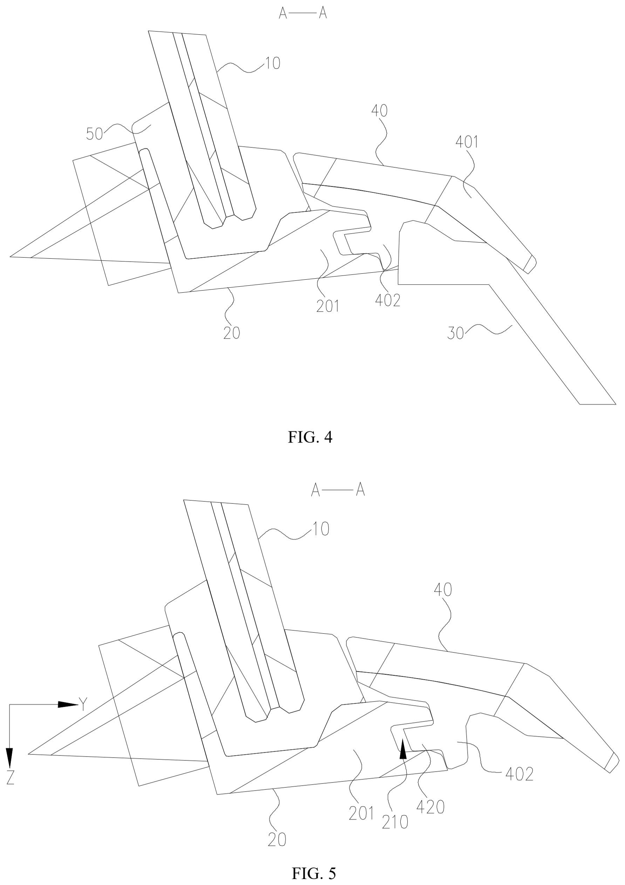

Reference can be made to FIG. 3 and FIG. 4, where FIG. 3 is a schematic structural view of a quarter window assembly 100 provided in an embodiment of the present disclosure from another perspective, and FIG. 4 is a schematic cross-sectional view of the quarter window assembly 100 shown in FIG. 3 taken along line A-A. The insert 20 and the quarter window glass 10 are integrally molded. Optionally, the insert 20 may be made of metal, plastic, or the like. In a possible embodiment, the insert 20 and the quarter window glass 10 can be integrally injection-molded. The insert 20 includes a first connecting portion 201. The first connecting portion 201 is used for connecting the first encapsulating member 40.

The counterpart 30 is disposed at the periphery of the quarter window glass 10. In other words, the counterpart 30 is disposed near the quarter window glass 10. That is, the counterpart 30 refers to a component of the vehicle 1000 that is assembled near the quarter window glass 10. In a possible embodiment, the counterpart 30 is a fender, and a part of the counterpart 30 is disposed at the periphery of the quarter window glass 10. The counterpart 30 is spaced apart from the quarter window glass 10. It can be understood that in the present disclosure, there is no interference between the counterpart 30 and the quarter window glass 10. The gap between the counterpart 30 and the quarter window glass 10 can be covered by the first encapsulating member 40.

The first encapsulating member 40 may be an encapsulation strip, for example, a plastic encapsulation strip, a metal encapsulation strip, or a rubber encapsulation strip. The first encapsulating member 40 includes a first encapsulating portion 401 and a second connecting portion 402 connected to the first encapsulating portion 401. The first encapsulating portion 401 and the second connecting portion 402 are connected integrally. The first encapsulating portion 401 is wrapped around the edge of the handle 30. The first encapsulating portion 401 serves to block the edge of the element 30. In a possible embodiment, the insert 20 exceeds the quarter window glass 10. One end of the first encapsulating portion 401 is wrapped around the edge of the counterpart 30, and the other end of the first encapsulating portion 401 is wrapped around the edge of the insert 20, so as to cover the fitting gap between the quarter window glass 10 and the counterpart 30. The second connecting portion 402 is detachably connected to the first connecting portion 201. It can be understood that the first encapsulating member 40 and the insert 20 can be assembled together or disassembled. The detachable connection manner between the second connecting portion 402 and the first connecting portion 201 includes, but is not limited to, threaded connection and snap-fit connection.

For the quarter window assembly 100 provided in the present disclosure, the insert 20 is integrally molded with the quarter window glass 10, the counterpart 30 is disposed at the periphery of the quarter window glass 10, and the first encapsulating member 40 is wrapped around the edge of the counterpart 30 and is detachably connected to the insert 20. Therefore, during replacement of the counterpart 30, the first encapsulating member 40 and the insert 20 can be directly separated, and then the counterpart 30 is detached, thereby achieving the purpose of maintaining and replacing the counterpart 30 without disassembling the quarter window glass 10. Furthermore, the difficulty in maintaining and replacing the counterpart 30 is reduced, damage to the quarter window glass 10 is avoided, and maintenance costs can be reduced.

In a possible embodiment, the second connecting portion 402 is fixed to the first connecting portion 201 by means of snap-fit connection. Since the second connecting portion 402 is fixed to the first connecting portion 201 by means of snap-fit connection, the detachable connection between the first encapsulating member 40 and the insert 20 can be achieved, so that the counterpart 30 can be separated from the quarter window glass 10 by disassembling the first encapsulating member 40, thereby avoiding the need to first remove the quarter window glass 10 when maintaining and replacing the counterpart 30. The snap-fit manner between the second connecting portion 402 and the first connecting portion 201 may include snap-fit connection between a groove and a protruding post, and may also include snap-fit connection between a snap-fit hook and a snap-fit slot.

As illustrated in FIG. 5, one of the first connecting portion 201 and the second connecting portion 402 defines a groove 210, and another of the first connecting portion 201 and the second connecting portion 402 includes a protruding post 420. The protruding post 420 is inserted into and snap-fitted into the groove 210. An opening of the groove 210 faces towards a first direction.

Optionally, the first connecting portion 201 of the insert 20 includes the groove 210, and the second connecting portion 402 of the first encapsulating member 40 includes the protruding post 420. Alternatively, the first connecting portion 201 of the insert 20 includes the protruding post 420, and the second connecting portion 402 of the first encapsulating member 40 includes the groove 210. In the embodiment of the present disclosure, that the first connecting portion 201 of the insert 20 includes the groove 210 and the second connecting portion 402 of the first encapsulating member 40 includes the protruding post 420 is taken as an example. In the embodiment of the present disclosure, the first direction may substantially refer to the Y-axis direction as shown in the drawing, and the first direction is also a mounting direction of the first encapsulating member 40 relative to the insert 20, which will not be repeated hereinafter. In a possible implementation, the groove 210 may be a U-shaped groove or a rectangular groove. Specifically, a bottom wall of the groove 210 and an opening of the groove 210 substantially face towards each other in the Y-axis direction. The groove 210 can further have a first sidewall and a second sidewall that face towards each other in the Z-axis direction, or the groove 210 can further have a third sidewall and a fourth sidewall that face towards each other in the X-axis direction. The X-axis direction, the Y-axis direction, and the Z-axis direction are perpendicular to one another. The protruding post 420 is substantially a rectangular post. Specifically, the protruding post 420 has a top surface, and a first side-surface and a second side-surface facing towards each other in the Z-axis direction, and can further have a third side-surface and a fourth side-surface facing towards each other in the X-axis direction. The top surface of the protruding post 420 can abut against the bottom wall of the groove 210. The first side-surface of the protruding post 420 can abut against the first sidewall of the groove 210. The second side-surface of the protruding post 420 can abut against the second sidewall of the groove 210. The third side-surface of the protruding post 420 can abut against the third sidewall of the groove 210. The fourth side-surface of the protruding post 420 can abut against the fourth sidewall of the groove 210.

By means of the fitting between the groove 210 of the first connecting portion 201 and the protruding post 420 of the second connecting portion 402, the insert 20 can be fixed to the first encapsulating member 40 by means of snap-fit connection in both the Z-axis direction and the X-axis direction, so as to avoid relative rotation or sliding between the insert 20 and the first encapsulating member 40. In addition, one of the first connecting portion 201 and the second connecting portion 402 includes the groove 210, and the other of the first connecting portion 201 and the second connecting portion 402 includes the protruding post 420, and the protruding post 420 is inserted into and snap-fitted into the groove 210, so that the second connecting portion 402 of the first encapsulating member 40 is fixed to the first connecting portion 201 of the insert 20 by means of snap-fit connection. Therefore, the assembly and disassembly of the first encapsulating member 40 and the insert 20 are simple, and the machining difficulty of the groove 210 and the protruding post 420 is relatively low, thereby facilitating implementation.

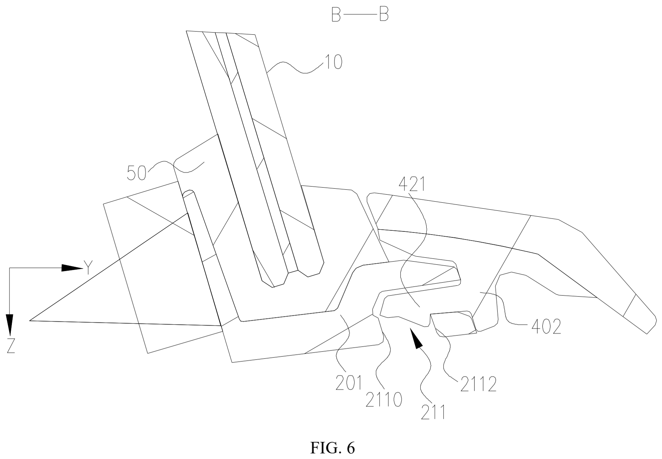

Reference can be made to FIG. 6, which is a schematic cross-sectional view of the quarter window assembly 100 shown in FIG. 3 taken along line B-B, one of the first connecting portion 201 and the second connecting portion 402 further includes a snap-fit hook 421, and the other of the first connecting portion 201 and the second connecting portion 402 further includes a snap-fit slot 211. The snap-fit hook 421 is snap-fitted with the snap-fit slot 211 in the first direction.

Optionally, the first connecting portion 201 of the insert 20 includes the snap-fit hook 421, and the second connecting portion 402 of the first encapsulating member 40 includes the snap-fit slot 211. Alternatively, the first connecting portion 201 of the insert 20 includes the snap-fit slot 211, and the second connecting portion 402 of the first encapsulating member 40 includes the snap-fit hook 421. In the embodiment of the present disclosure, that the first connecting portion 201 of the insert 20 includes the snap-fit slot 211 and the second connecting portion 402 of the first encapsulating member 40 includes the snap-fit hook 421 is taken as an example. The snap-fit hook 421 is snap-fitted with the snap-fit slot 211 in the first direction, that is, the snap-fit hook 421 and the snap-fit slot 211 are configured to implement the snap-fit fitting between the insert 20 and the first encapsulating member 40 in the first direction.

In a possible implementation, the snap-fit slot 211 has a first slot-wall 2110 and a second slot-wall 2112 that face towards each other and are spaced apart from each other in the Y axis direction. The snap-fit hook 421 has a first extending wall and a second extending wall that are connected in a bent manner. For example, the first extending wall and the second extending wall are bent at 90°C; or a bending angle between the first extending wall and the second extending wall may be less than 90°. The first extending wall extends towards the snap-fit slot 211 along one side of the second slot-wall 2112 facing away from the first slot-wall 2110. The second extending wall is located within the snap-fit slot 211, and abuts against one side of the second slot-wall 2112 facing towards the first slot-wall 2110. The abutment between the second extending wall and the second slot-wall 2112 achieves the snap-fit fixing between the insert 20 and the first encapsulating member 40 in the first direction.

The snap-fit hook 421 is snap-fitted with the snap-fit slot 211 in the first direction, so that the insert 20 can be fixed to the first encapsulating member 40 in the first direction by means of snap-fit connection, so as to prevent the first encapsulating member 40 from falling off relative to the insert 20. This embodiment may be combined with the technical solution of the snap-fit between the groove 210 and the protruding post 420 in the above embodiment, so as to achieve the snap-fit fixing between the insert 20 and the first encapsulating member 40 in the Y-axis direction, the X-axis direction, and the Z-axis direction, that is, to achieve the snap-fit fixing between the insert 20 and the first encapsulating member 40 in three mutually perpendicular directions.

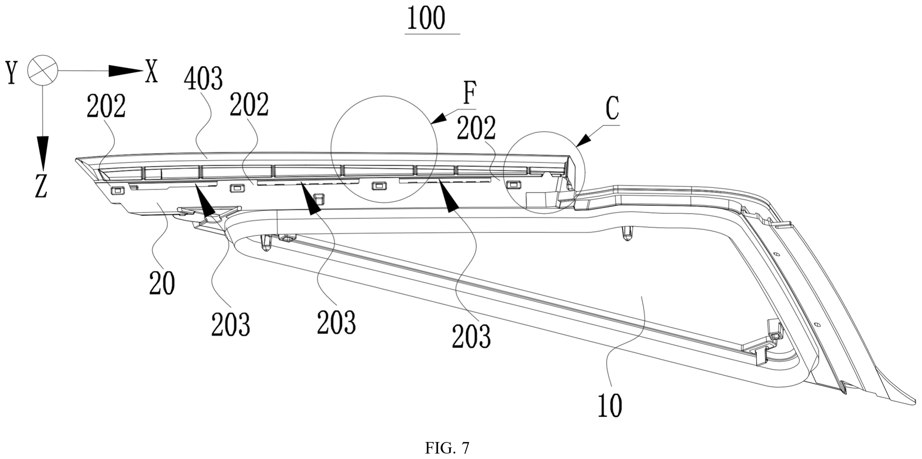

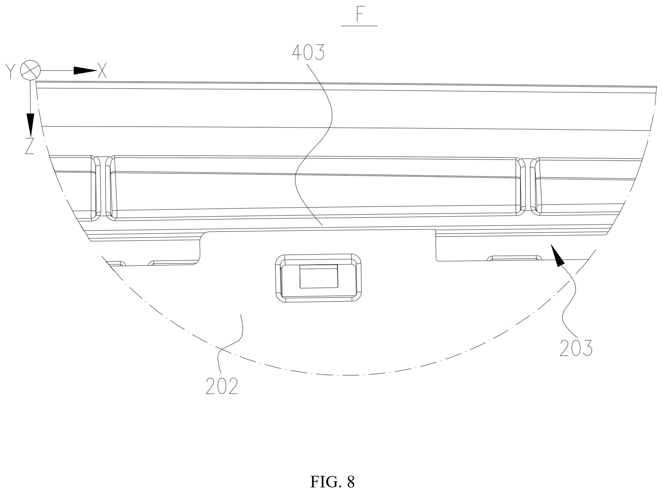

Further, reference can be made to FIG. 7 and FIG. 8, where FIG. 8 is a partial enlarged schematic structural view of the quarter window assembly 100 shown in FIG. 7 at region F. The insert 20 further includes a first limiting portion 202. The first encapsulating member 40 further includes a second limiting portion 403. The first limiting portion 202 has a first limiting surface facing towards the second limiting portion 403. The second limiting portion 403 has a second limiting surface facing towards the first limiting portion 202. The second limiting surface faces towards the first limiting surface in the first direction, and the first limiting surface is in contact with the second limiting surface.

The first limiting surface may be a flat surface, a circular arc surface, an irregularly-shaped curved surface, or the like. The second limiting surface may be a flat surface, a circular arc surface, an irregularly-shaped curved surface, or the like. Contact between the first limiting surface and the second limiting surface may be full contact or partial contact. Alternatively, the contact between the first limiting surface and the second limiting surface may allow a certain machining and assembly tolerances. Alternatively, a distance between the first limiting surface and the second limiting surface may be designed according to specific limiting requirements, that is, when the distance between the first limiting surface and the second limiting surface meets the limiting requirements, the first limiting surface can be considered to be in contact with the second limiting surface.

The first limiting surface abuts against the second limiting surface, thereby limiting the movement between the insert 20 and the first encapsulating member 40 in the first direction. In this way, the insert 20 and the first encapsulating member 40 can be further fixed in the first direction, and a positioning effect in the Y-axis direction can be provided when the insert 20 and the first encapsulating member 40 are assembled, thereby facilitating the assembly of the quarter window assembly 100. It can be understood that, in this embodiment, the insert 20 and the first encapsulating member 40 are in zero-clearance fit in the first direction, so as to limit the insert 20 and the first encapsulating member 40 in the first direction.

In a possible embodiment, referring to FIG. 7 and FIG. 8, there are multiple first limiting portions 202, and the multiple first limiting portions 202 are arranged at intervals. The insert 20 further defines at least one notch 203. One of the at least one notch 203 is located between adjacent two of the multiple first limiting portions 202. The number of the first limiting portions 202 is not specifically limited in the present disclosure. For example, the number of the first limiting portion 202 may be two, three, four, five, etc. The number of the notches 203 may be less than the number of the first limiting portions 202. For example, the number of the notches 203 may be one, two, three, four, or the like.

It can be understood that, the insert 20 has multiple first limiting surfaces arranged at intervals. A part of the second limiting surface is in contact with the multiple first limiting surfaces arranged at intervals, and the other part of the second limiting surface face towards the notches 203 of the insert 20. In other words, the second limiting surface of the first encapsulating member 40 is in partial contact with the insert 20.

The insert 20 defines the at least one notch 203, and one notch 203 is located between two adjacent first limiting portions 202, so that a clearance region can be formed to avoid over-positioning between the insert 20 and the first encapsulating member 40.

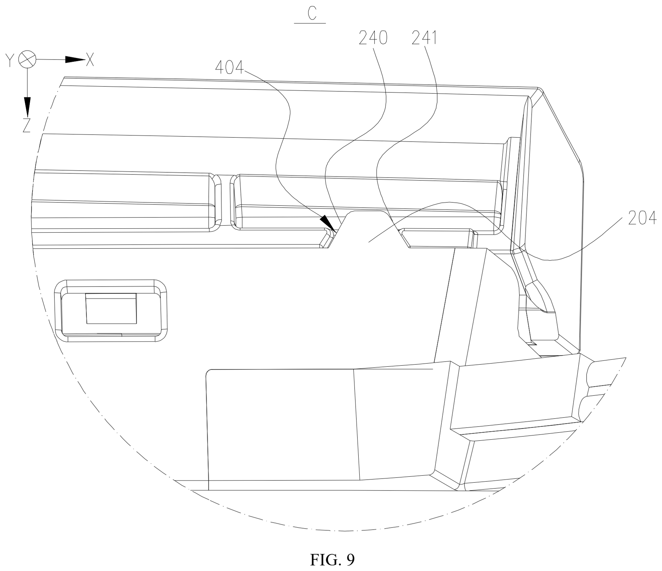

Further, reference can be made to FIG. 7 and FIG. 9, where FIG. 9 is a partial enlarged schematic structural view of the quarter window assembly 100 shown in FIG. 7 at region C. The insert 20 further includes a third limiting portion 204. The first encapsulating member 40 further includes a fourth limiting portion 404. The fourth limiting portion 404 is in fit with the third limiting portion 204 for limiting in the second direction. The second direction is perpendicular to the first direction.

The second direction may substantially refer to an X-axis direction as shown in the drawing. In the embodiments of the present disclosure, the second direction is exemplified by the X-axis direction, which will not be repeated hereinafter. Certainly, in other embodiments, the second direction may also be the Z-axis direction.

The insert 20 further includes the third limiting portion 204, the first encapsulating member 40 further includes the fourth limiting portion 404, and the fourth limiting portion 404 is in fit with the third limiting portion 204. Therefore, the insert 20 and the first encapsulating member 40 can be further limited in the X-axis direction, and the relative movement between the insert 20 and the first encapsulating member 40 in the X-axis direction is limited, thereby ensuring the position tolerance of the insert 20 and the first encapsulating member 40 in the X-axis direction. In addition, when the insert 20 is assembled with the first encapsulating member 40, the third limiting portion 204 and the fourth limiting portion 404 can provide positioning in the X-axis direction, thereby facilitating the assembly of the quarter window assembly 100.

In a possible implementation, the third limiting portion 204 is a conical boss. The fourth limiting portion 404 is a conical groove. The fitting between the conical boss and the conical groove can realize the limiting of the insert 20 and the first encapsulating member 40 in the X-axis direction. In addition, the conical boss can be easily inserted into the conical groove, thereby improving the convenience of assembly between the insert 20 and the first encapsulating member 40.

The third limiting portion 204 has a third limiting surface 240 and a fourth limiting surface 241 opposite to the third limiting surface 240 in the second direction. The fourth limiting portion 404 has a fifth limiting surface and a sixth limiting surface facing towards the fifth limiting surface in the second direction. The fifth limiting surface is in contact with the third limiting surface 240, and the sixth limiting surface is in contact with the fourth limiting surface 241. The third limiting surface 240 may be a flat surface, a circular arc surface, an irregularly-shaped curved surface, or the like. The fourth limiting surface 241 may be a flat surface, a circular arc surface, an irregularly-shaped curved surface, or the like. The fifth limiting surface may be a flat surface, a circular arc surface, an irregularly-shaped curved surface, or the like. The sixth limiting surface may be a flat surface, a circular arc surface, an irregularly-shaped curved surface, or the like. In the embodiment of the present disclosure, the third limiting surface 240, the fourth limiting surface 241, the fifth limiting surface, and the sixth limiting surface are all exemplified as flat surfaces.

By means of the contact between the fifth limiting surface and the third limiting surface 240 and the contact between the sixth limiting surface and the fourth limiting surface 241, the relative movement between the insert 20 and the first encapsulating member 40 in the X-axis direction is limited, and the position tolerance of the insert 20 and the first encapsulating member 40 in the X-axis direction can be ensured.

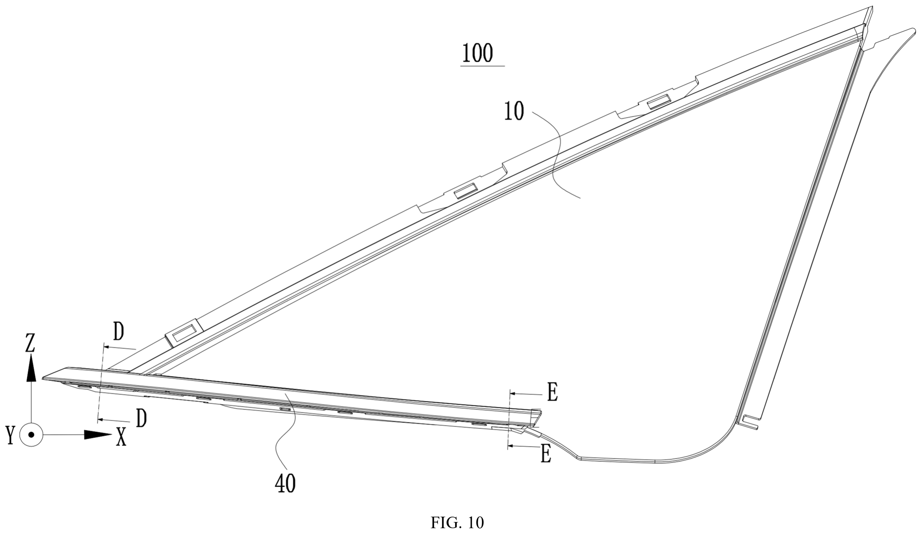

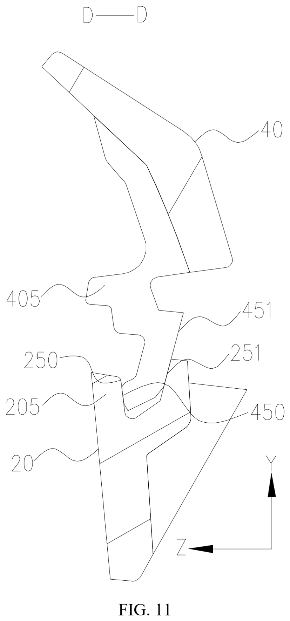

Further, reference can be made to FIG. 10 and FIG. 11, where FIG. 11 is a schematic cross-sectional view of the quarter window assembly 100 shown in FIG. 10 taken along line D-D. The insert 20 further includes a fifth limiting portion 205. The first encapsulating member 40 further includes a sixth limiting portion 405. The sixth limiting portion 405 is in fit with the fifth limiting portion 205 for limiting in the third direction. The sixth limiting portion 405 is connected to one end of the first encapsulating portion 401. In the present disclosure, the sixth limiting portion 405 and the first encapsulating portion 401 are integrally connected. The third direction is perpendicular to the first direction, and the third direction is perpendicular to the second direction.

The third direction may refer to the Z-axis direction as shown in the drawing. In the embodiment of the present disclosure, the third direction is exemplified by the Z-axis direction as an example, which will not be repeated hereinafter. Certainly, in other embodiments, the third direction may also be the X-axis direction.

The insert 20 further includes the fifth limiting portion 205, the first encapsulating member 40 further includes the sixth limiting portion 405, and the fifth limiting portion 205 is in fit with the sixth limiting portion 405. Therefore, the insert 20 and the first encapsulating member 40 can be further limited in the Z-axis direction, and the relative movement between the insert 20 and the first encapsulating member 40 in the Z-axis direction is limited. In addition, the sixth limiting portion 405 is connected to one end of the first encapsulating portion 401, so that shaking of the end of the first encapsulating member 40 can be reduced or avoided. Moreover, when the insert 20 is assembled with the first costing member 40, the fifth limiting portion 205 and the sixth limiting portion 405 can provide positioning in the Z-axis direction, thereby facilitating the assembly of the quarter window assembly 100.

The fifth limiting portion 205 has a seventh limiting surface 250 and an eighth limiting surface 251 facing towards the seventh limiting surface 250 in the third direction. The sixth limiting portion 405 has a ninth limiting surface 450 and a tenth limiting surface 451 opposite to the ninth limiting surface 450 in the third direction. The ninth limiting surface 450 is in contact with the seventh limiting surface 250. The tenth limiting surface 451 is in contact with the eighth limiting surface 251. The seventh limiting surface 250 may be a flat surface, a circular arc surface, an irregularly-shaped curved surface, or the like. The eighth limiting surface 251 may be a flat surface, a circular arc surface, an irregularly-shaped curved surface, or the like. The ninth limiting surface 450 may be a flat surface, a circular arc surface, an irregularly-shaped curved surface, or the like. The tenth limiting surface 451 may be a flat surface, a circular arc surface, an irregularly-shaped curved surface, or the like. In the embodiment of the present disclosure, that the seventh limiting surface 250, the eighth limiting surface 251, the ninth limiting surface 450, and the tenth limiting surface 451 are all flat surfaces is taken as an example.

By means of the contact between the ninth limiting surface 450 and the seventh limiting surface 250 and the contact between the tenth limiting surface 451 and the eighth limiting surface 251, the relative movement between the insert 20 and the first encapsulating member 40 in the Z-axis direction is limited, the stability of the insert 20 and the first encapsulating member 40 in the third direction can be further improved, and the shaking of one end of the first encapsulating member 40 in the third direction is prevented.

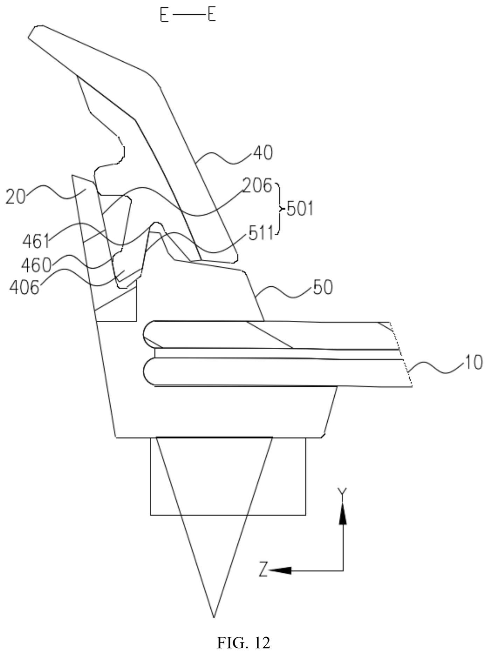

Further, reference can be made to FIG. 10 and FIG. 12, where FIG. 12 is a schematic cross-sectional view of the quarter window assembly 100 shown in FIG. 10 taken along line E-E. The quarter window assembly 100 further includes a second encapsulating member 50. The second encapsulating member 50 may include an encapsulating strip, an encapsulating coating, etc. The second encapsulating member 50 is integrally molded with the quarter window glass 10. In a possible embodiment, the second encapsulating member 50 and the quarter window glass 10 may be integrally injection-molded. The second encapsulating member 50 is wrapped around the edge of the quarter window glass 10 and covers the edge of the quarter window glass 10.

The second encapsulating member 50 and the insert 20 form a seventh limiting portion 501. The first encapsulating member 40 further includes an eighth limiting portion 406. The eighth limiting portion 406 is in fit with the seventh limiting portion 501 for limiting in the third direction. The eighth limiting portion 406 is connected to the other end of the first encapsulating portion 401. In the present disclosure, the eighth limiting portion 406 and the first encapsulating portion 401 are connected integrally.

Since the second encapsulating member 50 is integrally molded with the quarter window glass 10, and the insert 20 is integrally molded with the quarter window glass 10, by means of the fitting between the eighth limiting portion 406 of the first encapsulating member 40 and the seventh limiting portion 501 formed by both the second encapsulating member 50 and the insert 20, the movement of the first encapsulating member 40 relative to the second encapsulating member 50, the insert 20, and the quarter window glass 10 in the Z-axis direction can be further limited. In addition, the eighth limiting portion 406 is connected to the other end of the first encapsulating portion 401, shaking of the end of the first encapsulating member 40 can be reduced or avoided.

The seventh limiting portion 501 has an eleventh limiting surface 206 and a twelfth limiting surface 511 facing towards the eleventh limiting surface 206 in the third direction. In the embodiment of the present disclosure, the eleventh limiting surface 206 is located on the insert 20, and the twelfth limiting surface 511 is located on the second encapsulating member 50. The eighth limiting portion 406 has a thirteenth limiting surface 460 and a fourteenth limiting surface 461 opposite to the thirteenth limiting surface 460 in the third direction. The thirteenth limiting surface 460 in contact with the eleventh limiting surface 206. The fourteenth limiting surface 461 is in contact with the twelfth limiting surface 511. The eleventh limiting surface 206 may be a flat surface, a circular arc surface, an irregularly-shaped curved surface, or the like. The twelfth limiting surface 511 may be a flat surface, a circular arc surface, an irregularly-shaped curved surface, or the like. The thirteenth limiting surface 460 may be a flat surface, a circular arc surface, an irregularly-shaped curved surface, or the like. The fourteenth limiting surface 461 may be a flat surface, a circular arc surface, an irregularly-shaped curved surface, or the like. In the embodiment of the present disclosure, that the eleventh limiting surface 206, the twelfth limiting surface 511, the thirteenth limiting surface 460, and the fourteenth limiting surface 461 are all flat surfaces is taken an example.

By means of the contact between the thirteenth limiting surface 460 and the eleventh limiting surface 206 and the contact between the fourteenth limiting surface 461 and the twelfth limiting surface 511, the relative movement between the insert 20 and the first encapsulating member 40 in the Z-axis direction is limited, the stability of the insert 20 and the first encapsulating member 40 in the third direction can be further improved, and shaking of the other end of the first encapsulating member 40 in the third direction is prevented.

For the quarter window assembly 100 provided in the present disclosure, the detachable design of the insert member 20 and the first encapsulating member 40 allows the maintenance and replacement of the counterpart 30 without first disassembling the quarter window glass 10, thereby reducing the maintenance difficulty and the maintenance cost of the counterpart 30. In addition, the design of the first connecting portion 201 of the insert 20 and the second connecting portion 402 of the first encapsulating member 40, and the design of the insert 20, the first encapsulating member 40, and the multiple limiting portions of the second encapsulating member 50, further optimize the detachable connection manner of the insert 20 and the first encapsulating member 40, the movement of the first encapsulating member 40 relative to the insert 20, the second encapsulating member 50, and the quarter window glass 10 is limited. Therefore, the connecting reliability and tightness of the quarter window assembly 100 can be improved, and the assembly error of the first encapsulating member 40 can be reduced.

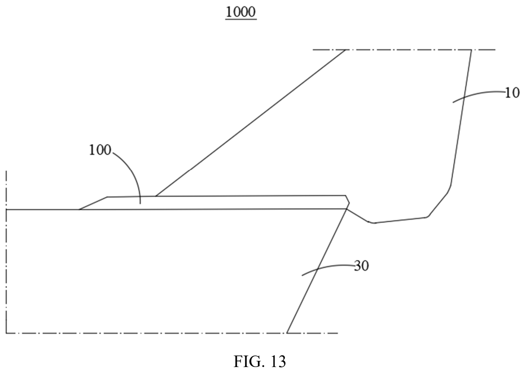

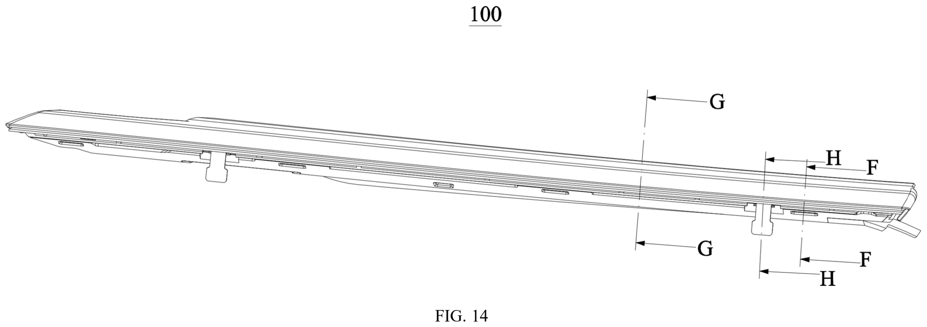

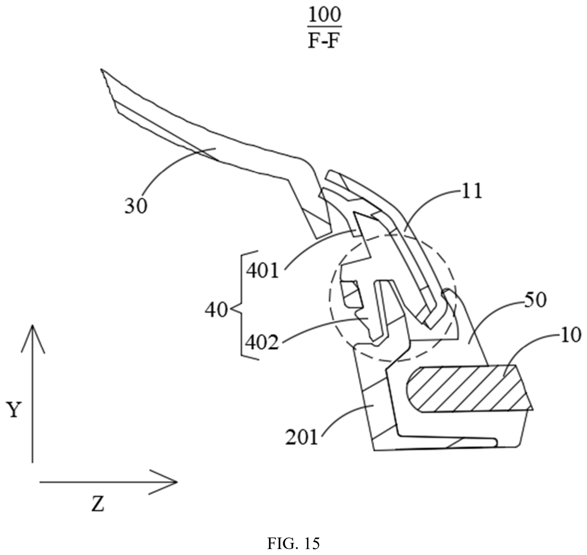

A quarter window assembly 100 is further provided in another implementation of the present disclosure. Reference can be made to FIG. 13 to FIG. 15. FIG. 13 is a schematic structural view of a vehicle provided in an implementation of the present disclosure. FIG. 14 is a schematic structural view of a quarter window assembly provided in another implementation of the present disclosure. FIG. 15 is a cross-sectional view of the quarter window assembly in FIG. 14 taken along cross-section line F-F.

A quarter window assembly 100 is provided in this implementation. The quarter window assembly 100 includes a decorative member 11. The decorative member 11 is disposed on an outer side surface of the first encapsulating portion 401.

The first connecting portion 201 is used for connecting the quarter window glass 10. The first encapsulating member 40 includes a second connecting portion 402 and a first encapsulating portion 401 facing towards the second connecting portion 402, and has an outer side surface connected to both the second connecting portion 402 and the first encapsulating portion 401. The second connecting portion 402 is configured to be snap-fitted with or separated from the first connecting portion 201. The first wrapped edge part 401 is configured to be lap-jointed with the counterpart 30. The decorative member 11 is disposed on the outer side surface.

The quarter window assembly 100 provided in this embodiment has an X direction, a Y direction, and a Z direction. The X direction is an extending direction of the first connecting portion 201 or an extending direction of the first encapsulating member 40. The Y direction is an arrangement direction from the first connecting portion 201 to the first encapsulating member 40, or the arrangement direction from the second connecting portion 402 to the first encapsulating member 401. The Z direction is an arrangement direction from the counterpart 30 to the quarter window glass 10.

The quarter window assembly 100 provided in this embodiment includes the decorative member 11 for decorating the vehicle 1000. The decorative member 11 may also be referred to as a trim. The decorative member 11 can be bonded to the first encapsulating member 40, or snap-fitted with the first encapsulating member 40, etc. For example, the decorative member 11 is bonded to the quarter window glass 10 via an adhesive member. The adhesive member is located between the quarter window glass 10 and the decorative member 11. The decorative member 11 surrounds at least a part of the quarter window glass 10. At least a part of the decorative member 11 is disposed between the quarter window glass 10 and the counterpart 30.

The quarter window assembly 100 provided in this embodiment further includes the first connecting portion 201 for connecting the quarter window glass 10. The first connecting portion 201 may be made of plastic. The first connecting portion 201 may be directly connected to the quarter window glass 10, or may be indirectly connected to the quarter window glass 10. For example, the first connecting portion 201 is connected to the second encapsulating member 50, and the window glass is connected to the second encapsulating member 50. Optionally, the quarter window glass 10 may be quarter window glass, windshield, or the like. Optionally, the quarter window glass 10, the second encapsulating member 50, and the first connecting portion 201 are integrally injection-molded.

The quarter window assembly 100 provided in this embodiment further includes a first encapsulating member 40 for connecting the first connecting portion 201 with the counterpart 30. The first encapsulating member 40 may be made of plastic. The first encapsulating member 40 includes the second connecting portion 402 and the first encapsulating portion 401, and has the outer side surface. The second connecting portion 402 is configured to be snap-fitted with the first connecting portion 201. The first encapsulating portion 401 is configured to be lap-jointed with the counterpart 30. The outer side surface is used for providing the decorative member 11. For example, the decorative member 11 is bonded to the outer side surface. Optionally, the hardness of the second connecting portion 402 is greater than the hardness of the first encapsulating portion 401. In this way, the reliability of the snap-fit connection between the first connecting portion 201 and the second connecting portion 402 is ensured, and the first encapsulating portion 401 is prevented from damaging the counterpart 30. For example, the second connecting portion 402 is made of hard plastic, and the first encapsulating portion 401 is made of soft plastic.

The first connecting portion 201 and the first encapsulating member 40 are detachably connected and snap-fitted with each other, and can be connected to or separated from each other. In the vehicle 1000, the first connecting portion 201 is used for connecting the quarter window glass 10, the first connecting portion 201 is snap-fitted with the first encapsulating member 40, and the first encapsulating member 40 is configured to be lap-jointed with the counterpart 30. When it is necessary to disassemble the counterpart 30, the first encapsulating member 40 and the decorative member 11 provided on the first encapsulating member 40 can be first disassembled together. That is, the first encapsulating member 40 and the decorative member 11 are first separated from the first connecting portion 201, and then the first encapsulating member 40 is separated from the counterpart 30, so that the counterpart 30 can be disassembled without disassembling the quarter window glass 10, and the quarter window glass 10 does not need to be replaced.

Therefore, in this implementation, by providing the first connecting portion 201 and the first encapsulating member 40 that can be snap-fitted with or separated from each other, when the counterpart 30 that interferes with the quarter window glass 10 needs to be replaced for the vehicle 1000, it is possible to avoid disassembling or replacing the quarter window glass 10 that interferes with the counterpart 30, thereby improving the convenience of modification or maintenance, and further reducing the costs of modification or maintenance.

In other words, regarding the problem that the quarter window glass needs to be disassembled first during modification, maintenance, disassembly of relevant covering parts on the vehicle body, this embodiment allows the vehicle-body covering-part that interferes with the quarter window glass to be easily disassembled without removing the quarter window glass, thereby further improving the convenience of modification and maintenance and reducing costs.

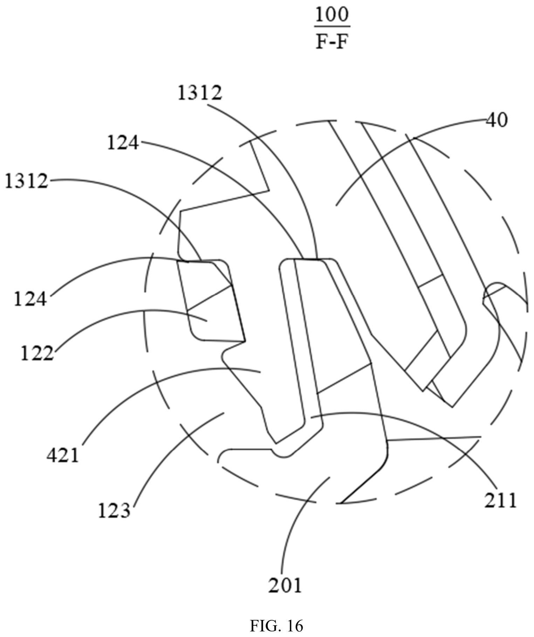

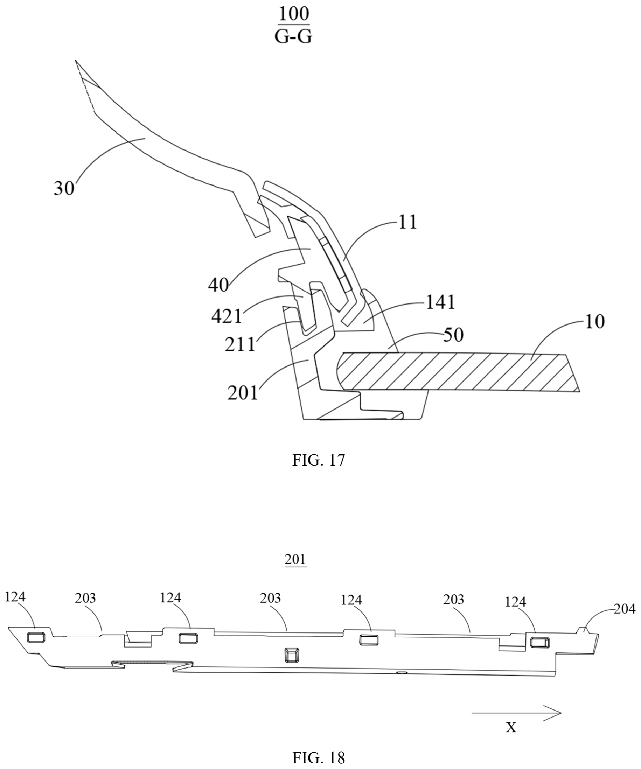

Reference can be made to FIG. 13 to FIG. 17. FIG. 16 is a partial enlarged view of FIG. 15. FIG. 17 is a cross-sectional view of the quarter window assembly in FIG. 14 taken along cross-section line G-G. In an implementation, the first connecting portion 201 defines a snap-fit slot 211 on a surface of the first connecting portion 201 facing towards the first encapsulating member 40. The snap-fit slot 211 is provided with a first snap portion 122 on a slot sidewall of the snap-fit slot 211. The second connecting portion 402 is provided with a snap-fit hook 421. The snap-fit hook 421 is configured to be disposed in the snap-fit slot 211 and abut against a surface of the first snap portion 122 facing towards a slot bottom-wall of the snap-fit slot 211.

There is a gap defined between the first snap portion 122 and the slot bottom-wall of the snap-fit slot 211. The first snap portion 122 may be a protrusion, and the snap-fit hook 421 may be a protrusion. Specifically, the snap-fit hook 421 can extend into the block and abut against the surface of the first snap portion 122 facing towards the slot bottom-wall of the snap-fit slot 211, so that the snap-fit hook 421 is snap-fitted with the first snap portion 122, that is, the first connecting portion 201 is snap-fitted with the first encapsulating member 40. When the snap-fit hook 421 is separated from the first snap portion 122, the snap-fit hook 421 may be disposed outside the snap-fit slot 211, so that the first connecting portion 201 is separated from the first encapsulating member 40.

In this implementation, the snap-fit hook 421 is disposed in the snap-fit slot 211, so as to prevent the first encapsulating member 40 from rotating and shaking in the Z direction. In addition, the snap-fit hook 421 is snap-fitted with the first snap portion 122, so that the first connecting portion 201 and the first encapsulating member 40 can be fixed in the Y direction, thereby preventing the first encapsulating member 40 from escaping outwards.

Reference can be made to FIG. 13 to FIG. 17. In an implementation, the first connecting portion 201 further defines an opening 123 extending through the slot sidewall of the snap-fit slot 211 and an outer surface of the first connecting portion 201. The opening 123 is closer to the slot bottom-wall of the snap-fit slot 211 than the first snap portion 122. When the snap-fit hook 421 abuts against the surface of the first snap portion 122 facing towards the slot bottom-wall of the snap-fit slot 211, at least a part of the snap-fit hook 421 is exposed from the opening 123.

The first connecting portion 201 provided in this implementation further defines the opening 123 for observing the snap-fit hook 421. When the snap-fit hook 421 abuts against the surface of the first block portion facing towards the slot bottom-wall of the snap-fit slot 211, at least the part of the snap-fit hook 421 is exposed from the opening 123. In other words, at this time, the snap-fit hook 421 can be observed from the opening 123, so that the user can confirm the position of the second block portion easily, thereby reducing the difficulty of the fitting between the first connecting portion 201 and the first encapsulating member 40, and facilitating modification or maintenance.

Furthermore, when the snap-fit hook 421 is separated from the first snap portion 122, the snap-fit hook 421 can be disposed outside the snap-fit slot 211, and the snap-fit hook 421 cannot be observed from the opening 123.

Reference can be made to FIG. 13 to FIG. 18. FIG. 18 is a schematic structural view of a first connecting portion provided in an implementation of the present disclosure. In an implementation, the first connecting portion 201 further has a first abutting surface 124 connected to a periphery of the snap-fit slot 211 in a bent manner. The second connecting portion 402 further has a second abutting surface 1312 connected to the snap-fit hook 421 in a bent manner. When the snap-fit hook 421 abuts against the surface of the first snap portion 122 facing towards the slot bottom-wall of the snap-fit slot 211, the second abutting surface 1312 is configured to abut against the first abutting surface 124. The first connecting portion 201 further defines a notch 203 on the surface of the first connecting portion 201 facing towards the first encapsulating member 40. The notch 203 is spaced apart from the snap-fit slot 211 in an extending direction of the first connecting portion 201. The notch 203 is configured to avoid a part of the first encapsulating member 40.

In this embodiment, the first connecting portion 201 has the first abutting surface 124, and the second connecting portion 402 of the first encapsulating member 40 has the second abutting surface 1312, the first abutting surface 124 and the second abutting surface 1312 abut against and are in fit with each other, so as to improve the reliability when the first connecting portion 201 is snap-fitted with the first encapsulating member 40. The first abutting surface 124 surrounds the periphery of the snap-fit slot 211, and the second abutting surface 1312 surrounds the first snap portion 122. When the snap-fit hook 421 is snap-fitted with the first snap portion 122, the second abutting surface 1312 abuts against and contacts the first abutting surface 124. In this implementation, the first abutting surface 124 is in fit with the second abutting surface 1312 to increase the contact area between the first connecting portion 201 and the first encapsulating member 40, so that the first connecting portion 201 and the first encapsulating member 40 can support each other, and the reliability of the snap-fit connection between the first connecting portion 201 and the first encapsulating member 40 is further improved.

In this implementation, the first connecting portion 201 and the first encapsulating member 40 are mounted in the Y direction, with the first abutting surface 124 and the second abutting surface 1312 serving as limiting, thereby preventing the first connecting portion 201 and the first encapsulating member 40 from escaping in the Y direction.

Furthermore, when the snap-fit hook 421 is separated from the first snap portion 122, the first abutting surface 124 is separated from the second abutting surface 1312.

In this embodiment, the first connecting portion 201 further defines the notch 203 for avoiding a part of the first encapsulating member 40. There are multiple notches 203. There are multiple snap-fit slots 211. The multiple notches 203 and the multiple snap-fit slots 211 are arranged at intervals in sequence. For example, in the extending direction of the first connecting portion 201, the snap-fit slot 211, the notch 203, the snap-fit slot 211, the notch 203, the snap-fit slot 211, the notch 203, and the snap-fit slot 211 are sequentially arranged at intervals. In this embodiment, the notch 203 is defined to avoid the part of the first encapsulating member 40, thereby ensuring that the snap-fit hook 421 can be snap-fitted with the first snap portion 122, and preventing the part of the first encapsulating member 40 from interfering with the snap-fit hook 421 caused by an excessive size error of the product in the manufacturing process.

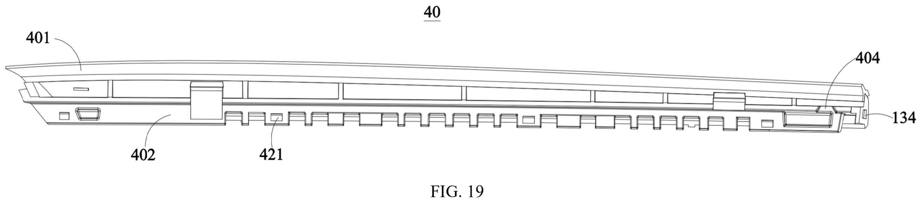

Reference can be made to FIG. 18 to FIG. 19, where FIG. 19 is a schematic structural view of a first encapsulating member provided in an implementation of the present invention. In an implementation, the first connecting portion 201 is further provided with a third limiting portion 204 on a surface of the first connecting portion 201 facing towards the first encapsulating member 40. The third limiting portion 204 is spaced apart from the snap-fit slot 211 in the extending direction of the first connecting portion 201. The first encapsulating member 40 is further provided with a fourth limiting portion 404. The fourth limiting portion 404 is configured to accommodate at least a part of the third limiting portion 204. The fourth limiting portion 404 is spaced apart from the snap-fit hook 421 along the extending direction of the first encapsulating member 40.

When the snap-fit hook 421 is snap-fitted with the first snap portion 122, that is, when the first encapsulating member 40 is snap-fitted with the first connecting portion 201, at least a part of the third limiting portion 204 is disposed in the fourth limiting portion 404. When the first connecting portion 201 is separated from the first encapsulating member 40, the third limiting portion 204 is disposed outside the fourth limiting portion 404. In addition, when the snap-fit hook 421 is separated from the first snap portion 122, the third limiting portion 204 is located outside the fourth limiting portion 404. Optionally, the limiting boss 134 is in a conical shape, and the fourth limiting portion 404 is also in a conical shape.

In this embodiment, the first connecting portion 201 is provided the third limiting portion 204, and the first encapsulating member 40 is provided with the fourth limiting portion 404. On the one hand, by means of the positions of the third limiting portion 204 and the fourth limiting portion 404, it is convenient for the user to quickly locate the positions of the first connecting portion 201 and the first encapsulating member 40 during mounting. On the other hand, the third limiting portion 204 and the fourth limiting portion 404 can also limit the positions of the first connecting portion 201 and the first encapsulating member 40 in the X direction, and can server as the fixing of the first connecting portion 201 and the first encapsulating member 40 in the X direction, thereby preventing the first encapsulating member 40 from escaping outwards.

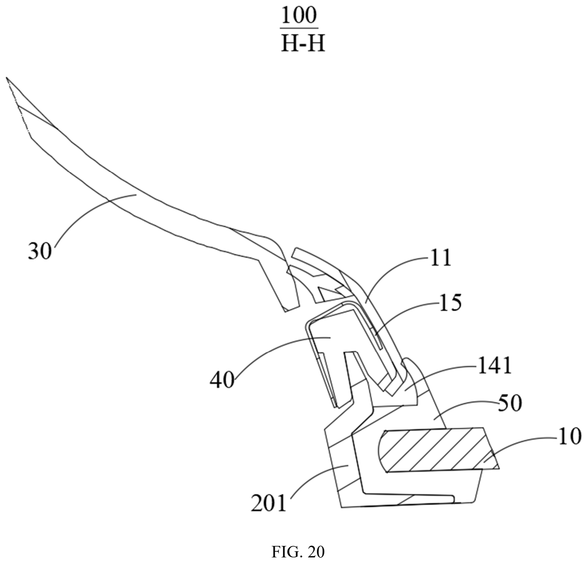

Reference can be made to FIG. 15, FIG. 17, to FIG. 20, where FIG. 20 is a cross-sectional view of the quarter window assembly in FIG. 14 taken along cross-section line H-H. In an implementation, the quarter window assembly 100 further includes a second encapsulating member 50 disposed at an outer side surface of the first connecting portion 201. The second encapsulating member 50 is configured to be connected to the quarter window glass 10. The second encapsulating member 50 defines a limiting groove 141 at one side of the second encapsulating member 50 facing towards the decorative member 11. The limiting groove 141 is configured to accommodate a part of the first encapsulating member 40 and a part of the decorative member 11. The limiting groove 141 is in communication with the first connecting portion 201. The part of the first encapsulating member 40 located in the limiting groove 141 abuts against the first connecting portion 201. The part of the decorative member 11 located in the limiting groove 141 abuts against the second encapsulating member 50.

The quarter window assembly 100 provided in this implementation further includes the second encapsulating member 50 for being wrapped around a part of the quarter window glass 10, so as to reduce the possibility of damaging the quarter window glass 10. The second encapsulating member 50 is elastic. The second encapsulating member 50 is disposed on the outer side surface of the first connecting portion 201, and the decorative member 11 is arranged on the outer side surface of the first encapsulating member 40. Optionally, the first connecting portion 201 defines an accommodating groove for accommodating at least a part of the second encapsulating member 50. The quarter window glass 10 is embedded in the second encapsulating member 50.

Furthermore, the second encapsulating member 50 further defines the limiting groove 141. The limiting groove 141 is further in communication with the first connecting portion 201. In other words, the limiting groove 141 is defined by surrounding a part of the first connecting portion 201 and a part of the second encapsulating member 50. The limiting groove 141 is configured for accommodating the first encapsulating member 40 and the decorative member 11. It can also be understood that the second connecting portion 402 of the first encapsulating member 40 is provided with a protrusion for being disposed in the limiting groove 141. Optionally, the snap-fit hook 421 and the protrusion of the second connecting portion 402 are arranged at intervals in an arrangement direction from the first connecting portion 201 to the second encapsulating member 50.

When the first encapsulating member 40 is snap-fitted with the first connecting portion 201, the first encapsulating member 40 and the decorative member 11 are located in the limiting groove 141. The first encapsulating member 40 in the limiting groove 141 abuts against the first connecting portion 201, that is, the protrusion of the second connecting portion 402 in the limiting groove 141 abuts against the first connecting portion 201. The decorative member 11 in the limiting groove 141 abuts against the second encapsulating member 50. When the first connecting portion 201 is separated from the first encapsulating member 40, the first encapsulating member 40 and the decorative member 11 are located outside the limiting groove 141.

In this implementation, by defining the limiting groove 141, the first encapsulating member 40 and the decorative member 11 are fixed in the Y direction, so as to prevent the first encapsulating member 40 and the decorative member 11 from escaping outwards. In addition, the first encapsulating member 40 located in the limiting groove 141 abuts against the first connecting portion 201, so as to further increase the contact area between the first encapsulating member 40 located in the limiting groove 141 and the first connecting portion 201, thereby improving the reliability of snap-fit connection between the first connecting portion 201 and the first encapsulating member 40. The decorative member 11 located in the limiting groove 141 abuts against the second framing part 50, which cannot only limit a decorative strip, but also reduce the probability of damaging the decorative strip.

Reference can be made to FIG. 19. In an implementation, the outer side surface is further provided with a limiting boss 134. The limiting boss 134 is configured to abut against an end portion of the decorative member 11 that is disposed in an extending direction of the first encapsulating member 40.

The limiting boss 134 can abut against the end portion of the decorative member 11 to limit and fix the decorative member 11 in the X direction, thereby preventing the decorative member 11 from escaping outwards.

Reference can be made to FIG. 20. In an implementation, the quarter window assembly 100 further includes a fixing member 15. The fixing member 15 is snap-fitted with the first edge portion 401 and a part of the outer side surface of the first encapsulating member 40. A part of the decorative member 11 is bonded to the fixing member 15 at one side of the fixing member 15 away from the outer side surface of the first encapsulating member 40, and another part of the decorative member 11 is bonded to the outer side surface of the first encapsulating member 40.

The quarter window assembly 100 provided in this implementation further includes the fixing member 15 for engaging with the first encapsulating member 40 and bonding the decorative member 11. The fixing member 15 may also be referred to as a claw. The fixing member 15 is snap-fitted with an end portion of the first encapsulating member 40 away from the first connecting portion 201, and the part of the fixing member 15 covers the outer side surface of the first encapsulating member 40. One part of the decorative member 11 is bonded to the fixing component 15, and the other part of the decorative member 11 is bonded to the outer surface of the first encapsulating member 40, so as to achieve double fixing and reduce the possibility of the decorative member 11 escaping.

The decorative member 11 can also be limited in the Z direction by means of the compressed adhesive tape.

Reference can be made to FIG. 13 to FIG. 20. The present disclosure further provides a vehicle 1000. The vehicle 1000 includes quarter window glass 10, a counterpart 30, and the quarter window glass assembly 100 as provided above in the present disclosure. The first connecting portion 201 of the quarter window glass assembly 100 is connected to the quarter window glass 10. The first encapsulating member 40 of the quarter window glass assembly 100 is lap-jointed with the counterpart 30.

In this implementation, for the vehicle 1000 adopting the quarter window assembly 100 provided above in the present disclosure, by providing the first connecting portion 201 and the first encapsulating member 40 that can be snap-fitted with or separated from each other, when the counterpart 30 that interferes with the quarter window glass 10 needs to be replaced for the vehicle 1000, it is possible to avoid disassembling or replacing the quarter window glass 10 that interferes with the counterpart 30, thereby improving the convenience of modification or maintenance, and further reducing the costs of modification or maintenance.

The present disclosure further provides a disassembly method. The disassembly method includes the following.

A vehicle provided above in the present disclosure is provided, and the first connecting portion is snap-fitted with the first encapsulating member.

The first encapsulating member and the decorative member form a connection group, so that the first connecting portion is separated from the connection group.

The connection group is separated from the counterpart, to separate the counterpart from the quarter window glass.

The disassembly method provided this implementation adopts the vehicle provided above in the present disclosure. When it is necessary to disassemble the counterpart, the first encapsulating member and the decorative member disposed on the first encapsulating member can first be disassembled together as a connection together. That is, the connection group is separated from the first connecting portion first, and then the first encapsulating member is separated from the counterpart, so that the counterpart that interferes with the quarter window glass can be disassembled without disassembling the quarter window glass, and the quarter window glass does not need to be replaced.

Therefore, by adopting the disassembly method provided in this implementation, when the counterpart that interferes with the quarter window glass needs to be replaced for the vehicle, the quarter window glass that interferes with the counterpart does not need to be disassembled or replaced. It is only necessary to first disassemble the connection group, and after the counterpart is replaced, there is no need to replace the quarter window glass, but only to individually replace the connection group, thereby improving the convenience of modification or maintenance, and further reducing the costs of modification or maintenance.

In an implementation, when it is necessary to disassemble the counterpart, the first encapsulating member, the decorative member, and the fixing member are first taken as a connection group, the connection group is disassembled, and then the counterpart is disassembled from the vehicle, so that the counterpart can be disassembled without disassembling the quarter window glass.

For example, during disassembly, the connection group is first taken as a small decorative assembly and is disassembled in the Y direction, and then the counterpart can be easily disassembled and replaced in the Z direction. After the counterpart is mounted and replaced, the connection group is remounted.

The features mentioned above in the specification, claims, and accompanying drawings may be combined with each other, as long as they are meaningful in the scope of the present disclosure. The advantages and features described for the quarter window assembly 100 are correspondingly applicable to the vehicle 1000.

Although the embodiments of the present disclosure have been shown and described, it should be understood that the above embodiments are illustrative and cannot be construed as limitations to the present disclosure. Those of ordinary skill in the art can make changes, modifications, replacements, and variations to the above embodiments within the scope of the present disclosure, and these changes and modifications shall also fall within the protection scope of the present disclosure.

## Claims

1. A quarter window assembly, comprising:
quarter window glass;
an insert integrally molded with the quarter window glass, wherein the insert comprises a first connecting portion; and
a first encapsulating member, wherein the first encapsulating member comprises a first encapsulating portion and a second connecting portion connected to the first encapsulating portion, the first encapsulating portion is configured to be wrapped around an edge of a counterpart, and the second connecting portion is detachably connected to the first connecting portion.

2. The quarter window assembly of claim 1, wherein the second connecting portion is fixed to the first connecting portion by means of snap-fit connection.

3. The quarter window assembly of claim 2, wherein one of the first connecting portion and the second connecting portion defines a groove, another of the first connecting portion and the second connecting portion comprises a protruding post, and the protruding post is inserted into and snap-fitted into the groove; wherein an opening of the groove faces towards a first direction.

4. The quarter window assembly of claim 3, wherein one of the first connecting portion and the second connecting portion further comprises a snap-fit hook, another of the first connecting portion and the second connecting portion further comprises a snap-fit slot, and the snap-fit hook is snap-fitted with the snap-fit slot in the first direction.

5. The quarter window assembly of claim 3, wherein the insert further comprises a first limiting portion, the first encapsulating member further comprises a second limiting portion, the first limiting portion has a first limiting surface facing towards the second limiting portion, the second limiting portion has a second limiting surface facing towards the first limiting portion, the second limiting surface faces towards the first limiting surface in the first direction, and the first limiting surface is in contact with the second limiting surface.

6. The quarter window assembly of claim 5, wherein the first limiting portion is implemented as a plurality of first limiting portions, the plurality of first limiting portions are arranged at intervals, the insert further defines at least one notch, and one of the at least one notch is located between adjacent two of the plurality of first limiting portions.

7. The quarter window assembly of any one of claims 3 to 6, wherein the insert further comprises a third limiting portion, the first encapsulating member further comprises a fourth limiting portion, and the fourth limiting portion is in fit with the third limiting portion for limiting in a second direction; wherein the second direction is perpendicular to the first direction.

8. The quarter window assembly of claim 7, wherein the third limiting portion has a third limiting surface and a fourth limiting surface opposite to the third limiting surface in the second direction, the fourth limiting portion has a fifth limiting surface and a sixth limiting surface facing towards the fifth limiting surface in the second direction, the fifth limiting surface is in contact with the third limiting surface, and the sixth limiting surface is in contact with the fourth limiting surface.

9. The quarter window assembly of claim 7, wherein the insert further comprises a fifth limiting portion, the first encapsulating member further comprises a sixth limiting portion, and the sixth limiting portion is in fit with the fifth limiting portion for limiting in a third direction; wherein the sixth limiting portion is connected to one end of the first encapsulating portion, and the third direction is perpendicular to both the first direction and the second direction.

10. The quarter window assembly of claim 9, wherein the fifth limiting portion has a seventh limiting surface and an eighth limiting surface facing towards the seventh limiting surface in the third direction, the sixth limiting portion has a ninth limiting surface and a tenth limiting surface opposite to the ninth limiting surface in the third direction, the ninth limiting surface is in contact with the seventh limiting surface, and the tenth limiting surface is in contact with the eighth limiting surface.

11. The quarter window assembly of claim 9, wherein the quarter window assembly further comprises a second encapsulating member that is integrally molded with the quarter window glass and wrapped around an edge of the quarter window glass, the second encapsulating member and the insert form a seventh limiting portion, the first encapsulating member further comprises an eighth limiting portion, and the eighth limiting portion is in fit with the seventh limiting portion for limiting in the third direction, wherein the eighth limiting portion is connected to another end of the first encapsulating portion.

12. The quarter window assembly of claim 11, wherein the seventh limiting portion has an eleventh limiting surface and a twelfth limiting surface facing towards the eleventh limiting surface in the third direction, the eighth limiting portion has a thirteenth limiting surface and a fourteenth limiting surface opposite to the thirteenth limiting surface in the third direction, the thirteenth limiting surface is in contact with the eleventh limiting surface, and the fourteenth limiting surface is in contact with the twelfth limiting surface.

13. The quarter window assembly of claim 1, wherein the quarter window assembly further comprises a decorative member, and the decorative member is disposed on an outer surface of the first encapsulating member.

14. The quarter window assembly of claim 13, wherein the first connecting portion defines a snap-fit slot, the snap-fit slot is provided with a first snap portion on a slot sidewall of the snap-fit slot, the second connecting portion is provided with a snap-fit hook, and the snap-fit hook is configured to be disposed in the snap-fit slot and abut against a surface of the first snap portion facing towards a slot bottom-wall of the snap-fit slot.

15. The quarter window assembly of claim 14, wherein the first connecting portion further defines an opening extending through the slot sidewall of the snap-fit slot and an outer surface of the first connecting portion, and the opening is closer to the slot bottom-wall of the snap-fit slot than the first snap portion; and when the snap-fit hook abuts against the surface of the first snap portion facing towards the slot bottom-wall of the snap-fit slot, at least a part of the snap-fit hook is exposed from the opening.

16. The quarter window assembly of claim 14, wherein the first connecting portion further has a first abutting surface connected to a periphery of the snap-fit slot in a bent manner, the second connecting portion further has a second abutting surface connected to the snap-fit hook in a bent manner, and when the snap-fit hook abuts against the surface of the first snap portion facing towards the slot bottom-wall of the snap-fit slot, the second abutting surface is configured to abut against the first abutting surface.

17. The quarter window assembly of claim 13, wherein the quarter window assembly further comprises a second encapsulating member that is integrally molded with the quarter window glass and wrapped around an edge of the quarter window glass, at least a part of the second encapsulating member is disposed on an outer side surface of the first connecting portion, the second encapsulating member defines a limiting groove at one side of the second encapsulating member facing towards the decorative member, the limiting groove is configured to accommodate a part of the second connecting portion and a part of the decorative member; the limiting groove is in communication with the first connecting portion, the part of the second connecting portion located in the limiting groove abuts against the first connecting portion, and the part of the decorative member located in the limiting groove abuts against the second encapsulating member.

18. The quarter window assembly of claim 17, wherein the outer side surface is further provided with a limiting boss, and the limiting boss is configured to abut against an end portion of the decorative member that is disposed in an extending direction of the first encapsulating member.

19. The quarter window assembly of claim 13, wherein the quarter window assembly further comprises a fixing member, the fixing member is snap-fitted with the second connecting portion and a part of an outer side surface of the first encapsulating member, a part of the decorative member is bonded to the fixing member at one side of the fixing member away from the outer side surface of the first encapsulating member, and another part of the decorative member is bonded to the outer side surface of the first encapsulating member.

20. A vehicle, comprising a counterpart and the quarter window assembly of any one of claims 1 to 19, wherein the counterpart is disposed at a periphery of the quarter window glass.
